**Europäisches Patentamt**

**European Patent Office**

**Office européen des brevets**

(19)

(11) Veröffentlichungsnummer : **0 487 546 B1**

(12)

# EUROPÄISCHE PATENTSCHRIFT

(45) Veröffentlichungstag der Patentschrift :
**15.12.93 Patentblatt 93/50**

(51) Int. Cl.$^5$ : **G01L 1/22, G01L 25/00**

(21) Anmeldenummer : **90910727.8**

(22) Anmeldetag : **06.07.90**

(86) Internationale Anmeldenummer :
**PCT/EP90/01096**

(87) Internationale Veröffentlichungsnummer :
**WO 91/02957 07.03.91 Gazette 91/06**

(54) **KRAFTMESSEINRICHTUNG.**

(30) Priorität : **19.08.89 DE 3927475**

(43) Veröffentlichungstag der Anmeldung :
**03.06.92 Patentblatt 92/23**

(45) Bekanntmachung des Hinweises auf die
Patenterteilung :
**15.12.93 Patentblatt 93/50**

(84) Benannte Vertragsstaaten :
**AT CH DE ES FR GB IT LI NL SE**

(56) Entgegenhaltungen :
**DE-A- 1 774 406**
**DE-B- 1 171 638**
**DE-B- 2 522 131**
**GB-A- 1 020 356**
**US-A- 4 113 040**
**US-A- 4 261 195**
**US-A- 4 475 610**

(73) Patentinhaber : **GTM GASSMANN THEISS**
**MESSTECHNIK GMBH**
**Friedrich-Ebert-Strasse 37**
**D-64342 Seeheim-Jugenheim (DE)**

(72) Erfinder : **GASSMANN, Helmut**
**Donnersbergstrasse 3**
**D-6104 Seeheim-Jugenheim (DE)**
Erfinder : **THEISS, Dieter**
**Habichtsweg 21**
**D-6101 Rossdorf (DE)**

(74) Vertreter : **Katscher, Helmut, Dipl.-Ing.**
**Bismarckstrasse 29**
**D-64293 Darmstadt (DE)**

EP 0 487 546 B1

# Beschreibung

Die Erfindung betrifft eine Kraftmeßeinrichtung mit einem in einem Hebellagergelenk schwenkbar gelagerten zweiarmigem Hebel mit zwei Lastangriffsgelenken.

Derartige Kraftmeßeinrichtungen mit zweiarmigen Hebeln sind beispielsweise Belastungsmaschinen, in denen Proben, beispielsweise Wägezellen oder Kraftmeßzellen, mit Kräften belastet werden, deren Größe mit hoher Genauigkeit bestimmt werden muß.Kraftmeßeinrichtungen der genannten Gattung sind aber auch Balkenwaagen und ähnliche Wägeeinrichtungen, die einen zweiarmigen Waagebalken aufweisen.

In allen diesen Anwendungsfällen beeinflussen Veränderungen der wirksamen Hebelarme des schwenkbar gelagerten Hebels während des Meßvorgangs die Genauigkeit unmittelbar. Um diese Einflüsse möglichst gering zu halten, werden das Hebellagergelenk und die beiden Lastangriffsgelenke üblicherweise als Gelenke mit jeweils einer Pfanne und einer darin gelagerten Schneide ausgeführt. Diese Pfannen-Schneiden-Gelenke haben daher im Waagenbau seit langem eine sehr weite Verbreitung gefunden.

Für hochgenaue Kraftmeßeinrichtungen, insbesondere die genannten Belastungsmaschinen, wirkt sich bei der Verwendung von Pfannen-Schneiden-Gelenken jedoch nachteilig aus, daß zwischen der Pfanne und der Schneide eine sehr hohe Flächenpressung herrscht, so daß Veränderungen durch Verschleiß nicht zu vermeiden sind. Nach längerem Betrieb wird die Form der Schneide ausgerundet, so daß sich mit der Bewegung von Schneide und Pfanne unter der Belastung eine Veränderung der Übersetzung ergibt. Außerdem wird die Ansprechempfindlichkeit kleiner und die Hysterese größer.

Diese Nachteile der in Schneiden und Pfannen gelagerten Hebel von Belastungsmaschinen führen dazu, daß der kurze Hebelarm nicht viel kleiner als 100 mm und das Übersetzungsverhältnis nicht viel größer als 10:1 gewählt werden kann. Infolge der auftretenden Flächenpressungen zwischen den Schneiden und Pfannen sind einer Steigerung der Nennlast Grenzen gesetzt: so liegt die Nennlast der bisher größten in dieser Konstruktion ausgeführten Belastungsmaschine bei 2,5 MN.

Es ist zwar bekannt, ein Gelenk zur Einleitung einer Kraft am Ende eines Hebels als Federgelenk auszuführen, beispielsweise in Form einer dünnen Blattfeder. Diese Gelenkbauweise findet sich auch gelegentlich bei Waagen. Der Nachteil dieser Federgelenke liegt aber in einer gegenüber einem Schneiden-Pfannen-Gelenk wesentlich höheren Meßunsicherheit, da die genauen wirksamen Drehpunkte des Hebels innerhalb der endlichen Dicke der Gelenkfedern nicht genau bestimmt werden konnten. Deshalb hat diese Bauweise bei hochgenauen Kraftmeßeinrichtungen der eingangs genannten Gattung, insbesonder bei Belastungsmaschinen, bisher keinen Eingang gefunden.

Aufgabe der Erfindung ist es daher, eine Kraftmeßeinrichtung der eingangs genannten Gattung so auszubilden, daß sie mit wesentlich höheren Nennlasten und/oder Übersetzungsverhältnissen ausgeführt werden kann und gleichwohl mit hoher Meßgenauigkeit arbeitet.

Diese Aufgabe wird erfindungsgemäß dadurch gelöst, daß die Lastangriffsgelenke und/oder das Hebellagergelenk als Federgelenk ausgeführt sind, das eine biegbare Gelenkfeder aufweist, daß beiderseits an der Gelenkfeder Dehnungsmeßstreifen aufgebracht sind, die zu einer Brückenschaltung zusammengeschaltet sind, und daß der Signalausgang der Brückenschaltung mit einer Auswerteschaltung verbunden ist.

Da in den Federgelenken keine Gleit- und Abwälzbewegungen wie zwischen Schneide und Pfanne auftreten, sind alle durch Verschleiß hervorgerufenen meßtechnischen Veränderungen ausgeschlossen. Die Kraftmeßeinrichtung kann für hohe Nennlasten und/oder hohe Übersetzungsverhältnisse ausgelegt werden. weil die Federgelenke nicht der Lastbegrenzung durch Flächenpressungen unterliegen und auch in den Bereichen hoher Belastung verschleißfrei arbeiten.

Im Vergleich zu Pfannen-Schneiden-Gelenken sind die Federgelenke unempfindlicher gegen schlagartige Belastungen, wie sie beispielsweise bei Belastungsmaschinen bei einem unbeabsichtigten Probenbruch auftreten können. Durch die Messung der Biegespannungen in den Gelenkfedern mittels der Dehnungsmeßstreifen können die wirksamen Drehpunkte innerhalb der Dicke der Gelenkfedern außerordentlich genau erfaßt und in der Auswerteschaltung zur rechnerischen Korrektur des Hebelarms verarbeitet werden.

Gemäß einer vorteilhaften Ausgestaltung des Erfindungsgedankens ist vorgesehen, daß beiderseits an der Gelenkfeder jeweils zwei Dehnungsmeßstreifen aufgebracht sind, die in der Brückenschaltung derart gegeneinander geschaltet sind, daß das der Auswerteschaltung zugeführte Brückenausgangssignal der Federbiegespannung unter Elimination der Federzugspannung proportional ist. Durch diese Schaltung der Dehnungsmeßstreifen jedes Federgelenks in einer Vollbrücke werden die ebenfalls auf die Dehnungsmeßstreifen wirkenden, oftmals sehr hohen Zugspannungen bereits in der Brückenschaltung eliminiert und stören das Brückenausgangssignal nicht, das dann nur noch die im Vergleich hierzu sehr viel geringere Federbiegespannung anzeigt. Aus dieser Federbiegespannung kann in einfacher Weise auf die jeweilige Verlagerung des wirksamen Drehpunktes innerhalb der Dicke der Gelenkfeder geschlossen werden.

Vorzugsweise sind an allen drei Federgelenken des Hebels die Dehnungsmeßstreifen jeder Gelenkfeder jeweils gesondert zu einer Brückenschaltung geschaltet und die Brückenausgangssignale aller Brückenschaltungen werden einer gemeinsamen Auswerteschaltung zugeführt. Dadurch werden in der Auswerteschaltung die an allen drei Gelenken auftretenden Verlagerungen der wirksamen Drehpunkte erfaßt, so daß rechnerisch die dadurch bedingten Änderungen der Hebelarme berücksichtigt werden können. Hierzu wird in der Auswerteschaltung aus dem der Biegespannung entsprechenden Brückenausgangssignal die Verlagerung des wirksamen Drehpunktes innerhalb der Dicke der Gelenkfeder bestimmt und als Korrekturwert bei der Kraftmessung eingesetzt.

Stattdessen ist es auch möglich, daß in der Auswerteschaltung nur dann ein Meßbefehl zur Durchführung einer Kraftmessung ausgelöst wird, wenn das Brückenausgangssignal bzw. die von mehreren Gelenken erhaltenen Brückenausgangssignale den Wert Null haben, woraus zu entnehmen ist, daß der wirksame Drehpunkt in der Mitte der Gelenkfeder liegt.

Nachfolgend werden Ausführungsbeispiele der Erfindung näher erläutert, die in der Zeichnung dargestellt sind.

Es zeigt:

Fig. 1a) in vereinfachter Darstellungsweise einen zweiarmigen Hebel einer Kraftmeßeinrichtung mit Federgelenken,

Fig. 1b) ein vereinfachtes elektrisches Schaltbild der an den Federgelenken in Fig. 1 a) angebrachten Dehnungsmeßstreifen und

Fig. 2 in vereinfachter Darstellungsweise eine Belastungsmaschine.

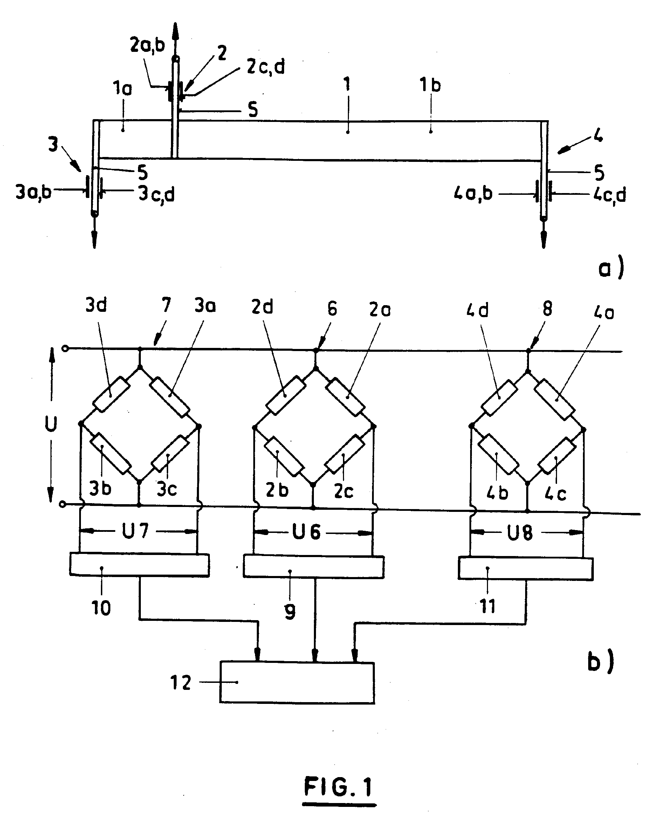

Der in Fig. 1a vereinfacht gezeigte zweiarmige Hebel 1 stellt einen Waagebalken einer Balkenwaage oder einen Belastungshebel in einer Belastungsmaschine dar. Er ist in einem außermittig angeordneten Hebellagergelenk 2 schwenkbar gelagert und weist einen kürzeren Hebelarm 1a und einen längeren Hebelarm 1b auf. An den beiden Enden der Hebelarme 1a und 1b ist jeweils ein Lastangriffsgelenk 3 bzw. 4 angeordnet.

Das Hebellagergelenk 2 und die Lastangriffsgelenke 3 und 4 sind als Federgelenke ausgeführt. Jedes Federgelenk 2, 3 oder 4 besteht jeweils aus einer Gelenkfeder 5, beispielsweise einer dünnen, im Ruhezustand senkrecht ausgerichteten Blattfeder 5, die biegesteif am Hebel 1 angebracht ist. Das Federgelenk 12 trägt den Hebel 1 mit den daran an den Federgelenken 3 und 4 angreifenden, in Fig. 1a schematisch mit Pfeil angedeuteten Lasten bzw. Kräften.

Auf jeder Seite der Blattfeder 5 sind jeweils zwei Dehnungsmeßstreifen appliziert, bei jedem Federgelenk 2, 3 bzw. 4 jeweils vier Dehnungsmeßstreifen, die beim Federgelenk 2 mit 2a-d, beim Federgelenk 3 mit 3a-d und beim Federgelenk 4 mit 4a-d bezeichnet sind.

Wie in Fig. 1b gezeigt, sind die Dehnungsmeßstreifen jedes Federgelenks 2, 3 bzw. 4 jeweils derart zu einer Vollbrückenschaltung gegeneinander geschaltet, daß sich die beiden auf einer gemeinsamen Seite der Gelenkfeder befindlichen Dehnungsmeßstreifen in der Brückenschaltung gegenüberliegen. Die drei den Federgelenken 2, 3 und 4 zugeordneten Brückenschaltungen 6, 7 und 8 liegen an einer Versorgungsspannung U. Die an jeder Brückenschaltung 6, 7 bzw. 8 abgegriffenen Brückenausgangsspannungen U6, U7 bzw. U8 werden jeweils über eine Signalverarbeitungseinrichtung 9, 10 bzw. 11 als Brückenausgangssignale einer Auswerteschaltung 12 zugeführt. Dort wird aus den der jeweiligen Biegespannung der Gelenkfeder 5 entsprechenden Brückenausgangssignalen rechnerisch die Verlagerung des wirksamen Drehpunktes innerhalb. der Dicke der Gelenkfeder 5 bestimmt und bei der Kraftmessung als Korrekturwert eingesetzt, der den veränderten wirksamen Hebelarm berücksichtigt.

Stattdessen kann auch vorgesehen sein, daß in der Auswerteschaltung 12 erst dann ein einen Meßvorgang auslösender Meßbefehl ausgeführt wird, wenn die Brückenausgangssignale U6,U7 und U8 den Wert Null annehmen, wodurch signalisiert wird, daß die Gelenkfedern 5 biegespannungsfrei sind, so daß der wirksame Drehpunkt in den Federmitten liegt.

Die Messung kann in der Weise durchgeführt werden, daß nur die Differenz der Biegespannungssignale der Gelenkfedern 5 des Hebellagergelenkes 2 und des Lastangriffsgelenkes 3 am kürzeren Hebelarm 19 gebildet und bei Null ein Meß- bzw. Steuerbefehl ausgelöst wird.

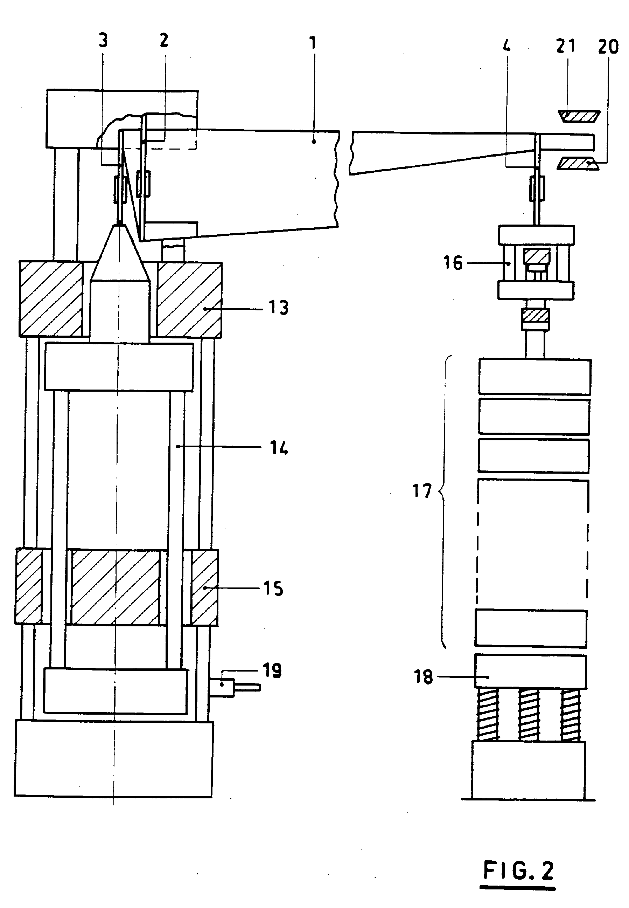

Fig. 2 zeigt in vereinfachter Darstellungsweise eine Belastungsmaschine, die dazu dient. Proben. beispielsweise Wägezellen oder Kraftmeßdosen, mit einer vorgegebenen Prüfkraft hoher Genauigkeit zu belasten. Bei der nachfolgenden Beschreibung der Belastungsmaschine werden für den Hebel, die Federgelenke und die Dehnungsmeßstreifen die gleichen Bezugzeichen verwendet wie in Fig. 1.

In einem Grundrahmen 13 hängt ein Belastungsrahmen 14, der über das Federgelenk 3 mit dem austarierten Hebel 1 als Übersetzungshebel verbunden ist. Dieser hängt über das zweiteilige Federgelenk 2 an zwei Säulenportalen des Grundrahmens 13. Eine motorisch verfahrbare, am Grundrahmen 13 geführte Zwischentraverse 15 ist so zwischen der oberen und der unteren Traverse des Belastungsrahmens 14 angeordnet, daß zwei höhenverstellbare Prüfräume entstehen, und zwar jeweils ein Prüfraum für Zug und ein Prüfraum für Druck.

Über das Federgelenk 4 und ein Kardangelenk 16 wirkt ein Gewichtsstapel 17 auf das andere Ende des Hebels 1 am längeren Hebelarm 1b ein. Die Federgelenke 2, 3 und 4 bestimmen die Hebelarme 1a und 1b des Hebels 1 und damit das Übersetzungsverhältnis, mit dem der Gewichtsstapel 17 auf den Belastungsrahmen 14 und damit auf den Prüfling einwirkt. Der Gewichtsstapel 17 ruht auf einem Hubtisch 18. Wird der Hubtisch 18 nach unten gefahren, so hängen sich die ineinander gehängten Gewichte des Gewichtsstapels 17 nacheinander an den Hebel 1 an; beim Hochfahren des Hubtischs 18 setzen sich die am Hebel 1 hängenden Gewichte auf dem Hubtisch 18 entsprechend ab.

Über das Kardangelenk 16 werden nur noch sehr kleine Momente aus einer außermittigen Aufhängung der Gewichte, entsprechend den Reibverhältnissen im Gelenk, übertragen. Aus den Biegespannungen des Federgelenks 4 müssen deshalb nur noch sehr geringe Korrekturen des Hebelarms abgeleitet werden.

Auf den Gelenkfedern 5 der Federgelenke 2, 3 und 4 sind beidseitig die Dehnungsmeßstreifen 2a-d, 3a-d und 4a-d appliziert, mit denen die Verformungen der Gelenkfedern 5 gemessen werden. Die jeweils vier Dehnungsmeßstreifen jeder Gelenkfeder 5 sind in der Weise zusammengeschaltet, wie vorher schon beschrieben wurde.

Am Belastungsrahmen 14 sind zwei Tariereinrichtungen 19 angebracht, mit denen dieser in den beiden vertikalen Richtungen so ausgerichtet werden kann, daß bei eingebauter, aber noch nicht belasteter Probe das Brückenausgangssignal der Brückenschaltung 7 des Federgelenks 31 zu Null wird.

Der Weg des Hebels 1 wird durch einen unteren Anschlag 20 und einen oberen Anschlag 21 so begrenzt, daß bei einer Be- oder Entlastung die Laständerung bis zum Ansprechen des jeweiligen Anschlags 20 bzw. 21 kleiner als die kleinste Laststufe des Gewichtsstapels 17 ist.

Die Probe, z. B. eine Wägezelle, wird je nach gewünschter Beanspruchungsart in den Zug- oder in den Druckraum eingebracht. Mit Hilfe der Tariereinrichtungen 19 wird der Belastungsrahmen 14 so ausgerichtet, daß das Brückenausgangssignal des Federgelenks 3 zu Null wird. Über den Hubtisch 18 wird die erste Belastungsstufe an den Hebel 1 angehängt. Der Hebel 1 setzt am unteren Anschlag 20 auf. Durch eine Regeleinrichtung wird die Zwischentraverse 15 so verfahren, daß die Differenz der Signale der Meßbrücken 6 und 7 der Federgelenke 2 und 3 zu Null wird. Damit ist sichergestellt, daß das tatsächliche Übersetzungsverhältnis sehr genau dem konstruktiv vorgegebenen Übersetzungsverhältnis entspricht, solange die Hebelarmänderung aus der Biegung der Gelenkfeder 5 des Federgelenks 4 vernachlässigbar klein ist. Dies ist in der Regel der Fall. Anderenfalls ist der Einflu des Federgelenks 4 durch eine entsprechende Korrektur in der Auswerteschaltung 12 zu berücksichtigen.

Eine Abschätzung der theoretisch erreichbaren Fehlergrenze der Belastungsmaschine nach Fig. 2 ergibt, daß bei beispielsweise einem Übersetzungsverhältnis von 50:1, einer Federdicke von 1 mm und einem Lastarm von 50 mm der maximale Fehler unter $7 \cdot 10^{-9}$ liegt.

Das Übersetzungsverhältnis geht dabei nur sehr geringfügig in den zu erwartenden Fehler ein. Deshalb können auf diese Weise sehr große Übersetzungsverhältnisse bei relativ kurzen Lastarmen verwirklicht werden. Dadurch können solche Belastungsmaschinen sehr kompakt gebaut und die Gewichtsstapel sehr klein und übersichtlich gehalten werden. Die Hebelmomente bleiben klein: damit bleibt auch die Beanspruchung im Übersetzungshebel 1 und im Grundrahmen 13 niedrig.

Die Berechnung der Verlagerung des wirksamen Drehpunktes in den Gelenkfedern 5, d.h. die Gelenkverschiebung e, wird in der Auswerteschaltung 12 aus den in der jeweiligen Brückenschaltung 6, 7 bzw. 8 ermittelten Spannungswerten σ b (Biegespannung) und σ a (Axialspannung) nach der folgenden Beziehung errechnet, wobei s die Dicke der Blattfeder 5 ist:

$$e = \frac{1}{6} \cdot s \frac{\sigma b}{\sigma a}.$$

**Patentansprüche**

1.  Kraftmeßeinrichtung mit einem in einem Hebellagergelenk (2) schwenkbar gelagerten zweiarmigen Hebel (1) mit zwei Lastangriffsgelenken (3, 4), dadurch gekennzeichnet, daß die Lastangriffsgelenke (3, 4) und/oder das Hebellagergelenk (2) als Federgelenk ausgeführt sind, das eine biegsame Gelenkfeder (5) aufweist, daß beiderseits an der Gelenkfeder (5) Dehnungsmeßstreifen (2a-d, 3a-d, 4a-d) aufgebracht sind, die zu einer Brückenschaltung (6, 7 bzw. 8) zusammengeschaltet sind, und daß der Signalausgang der Brückenschaltung (6, 7 bzw. 8) mit einer Auswerteschaltung (12) verbunden ist.

2.  Kraftmeßeinrichtung nach Anspruch 1, dadurch gekennzeichnet, daß beiderseis an der Gelenkfeder (5) jeweils zwei Dehnungsmeßstreifen (2a-d, 3a-d, 4a-d) aufgebracht sind, die in der Brückenschaltung (6, 7 bzw. 8) derart gegeneinander geschaltet sind, daß das der Auswerteschaltung (12) zugeführte Brückenausgangssignal (U6, U7 bzw. U8) der Federbiegespannung unter Elimination der Federzugspannung proportional ist.

3.  Kraftmeßeinrichtung nach Anspruch 1 oder 2, dadurch gekennzeichnet, daß an allen drei Federgelenken (2, 3, 4) des Hebels (1) die Dehnungsmeßstreifen (2a-d, 3a-d, 4a-d) jeder Gelenkfeder (2, 3 bzw. 4) jeweils gesondert zu einer Brückenschaltung (6, 7 bzw. 8) geschaltet sind und daß die Brückenausgangssignale (U6, U7 bzw. U8) aller Brückenschaltungen (6, 7 bzw.8) einer gemeinsamen Auswerteschaltung (12) zugeführt werden.

4. Kraftmeßeinrichtung nach einem der Ansprüche 1-3, dadurch gekennzeichnet, daß in der Auswerteschaltung (12) bei einem Brückenausgangssignal (U6, U7 bzw. U8) von Null ein Meßbefehl ausgelöst wird.

5. Kraftmeßeinrichtung nach einem der Ansprüche 1-3, dadurch gekennzeichnet, daß in der Auswerteschaltung (12) aus dem der Federbiegespannung entsprechenden Brückenausgangssignal (U6, U7 bzw. U8) die Verlagerung des wirksamen Drehpunktes innerhalb der Dicke der Gelenkfeder (5) bestimmt und als Korrekturwert bei der Kraftmessung eingesetzt- wird.

6. Kraftmeßeinrichtung nach einem der Ansprüche 1-3, dadurch gekennzeichnet, daß die Differenz des Brückenausgangssignale (U6,U7) der Gelenkfedern (5) des Hebellagergelenks (2) und des einen Lastangriffsgelenks (3) gebildet und bei Null ein Meß- bzw. Steuerbefehl ausgelöst wird.

7. Kraftmeßeinrichtung nach einem der Ansprüche 1-3, dadurch gekennzeichnet, daß vorzugsweise am längeren Hebelarm (1b) die Last über ein Kardangelenk (16) an die Gelenkfeder (5) angehängt wird.

## Claims

1. Force measuring device with two-arm lever (1) with two load application joints (3, 4) pivotingly supported in a lever bearing articulation (2), characterized in that the load application joints (3, 4) and/or the lever bearing articulation (2) is inthe form of a spring joint comprising a flexible joint spring (5), that strain gages (2a-d, 3a-d, 4a-d) are applied on either side to the joint spring (5), said strain gages being interconnected in a bridge circuit (6, 7 and 8), and that the signal outlet of the bridge circuit (6, 7 and 8) is connected with an evaluating circuit (12).

2. Force measuring device according to Claim 1, characterized in that two strain gages (2a-d, 3a-d, 4a-d) are applied to either side of the joint spring (5), said strain gages being being connected in the bridge circuit (6, 7 and 8) against each other in a manner such that the bridge output signal (U6, U7, U8) conducted tot he evaluating circuit (12) is proportional to the spring bending stress, while climinating the spring tensile stress.

3. Force measuring device according to one of the preceding claims, characterized in that on all three of the spring joints (2, 3, 4) of the lever (1) the strain gages (2a-d, 3a-d, 4a-d) of each of the joint springs (5) are connected separately into a bridge circuit (6, 7, 8) and that the bridge output signals (U6, U7, U8) of all of the bridge circuits (6, 7, 8) are entered in a common evaluating circuit (12).

4. Force measuring device according to one of the preceding claims, characterized in that in the evaluating circuit (12) a measuring command is generated if the bridge output signal (U6, U7, U8) is zero.

5. Force measuring device according to one of Claims 1 to 3, characterized in that in the evaluating circuit (12) the displacement of the effective point of rotation within the thickness of the joint spring (5) is determined from the bridge output signal (U6, U7, U8) corresponding to the spring bending stress and applied to the force measurement as a correction value.

6. Force measuring device according to one of Claims 1-3, characterized in that the difference of the bridge output signal (U6, U7) of the joint springs (5) of the lever bearing articulation (2) and of one load application joint (3) is established and in the case of zero, a measuring and control command actuated.

7. Force measuring device according to one of Claims 1-3, characterized in that preferably at the longer lever arm (1b) the load is suspended by means of a universal joint (16) from the joint spring (5).

## Revendications

1. Dispositif dynamométrique comportant un levier (1) à deux bras monté à pivotement dans une articulation d'appui (2) et comportant deux articulations d'application de charge (3, 4), caractérisé en ce que les articulations d'application de charge (3, 4) et/ou l'articulation d'appui (2) du levier se présentent sous la forme d'une articulation à ressort qui comporte un ressort flexible (5), des deux côtés du ressort (5) de l'articulation sont appliquées des jauges extensométriques (2a-d, 3a-d, 4a-d) qui sont interconnectées à un circuit à pont (6, 7 ou 8) et la sortie de signal du circuit à pont (6, 7 ou 8) est connectée à un circuit d'évaluation (12).

2. Dispositif dynamométrique selon la revendication 1, caractérisé en ce que des deux côtés du ressort (5) de l'articulation sont respectivement appliquées deux jauges extensométriques (2a-d, 3a-d, 4a-d) qui sont connectées l'une vis-à-vis de l'autre par le circuit à pont (6, 7 ou 8) en sorte que le signal de sortie du pont (U6, U7 ou U8) acheminé au circuit d'évaluation (12) soit proportionnel à la contrainte de flexion du ressort après élimination de la contrainte de traction du ressort.

3. Dispositif dynamométrique selon la revendication 1 ou 2, caractérisé en ce que sur la totalité des trois articulations à ressort (2, 3, 4) du levier (1), les jauges extensométriques (2a-d, 3a-d, 4a-d) de chaque ressort d'articulation (2, 3 ou 4) sont séparément connectées respectivement à un circuit à pont (6, 7 ou 8) et les signaux de sortie (U6, U7 ou U8) de tous les circuits à pont (6, 7 ou 8) sont acheminés à un circuit d'évaluation commun (12).

4. Dispositif dynamométrique selon l'une quelconque des revendications 1 à 3, caractérisé en ce qu'un ordre de mesure est déclenché dans le circuit d'évaluation (12) lorsque le signal de sortie du pont (U6, U7 ou U8) est nul.

5. Dispositif dynamométrique selon l'une quelconque des revendications 1 à 3, caractérisé en ce qu'on détermine dans le circuit d'évaluation (12) à partir du signal de sortie du pont (U6, U7 ou U8) correspondant à la contrainte de flexion du ressort le déplacement du pivot efficace dans l'épaisseur du ressort (5) de l'articulation et on l'utilise comme valeur corrective dans la mesure des forces.

6. Dispositif dynamométrique selon l'une quelconque des revendications 1 à 3, caractérisé en ce que l'on forme la différence des signaux de sortie du pont (U6, U7) des ressorts (5) de l'articulation d'appui (2) du levier et de la première articulation d'application de charge (3) et on déclenche un ordre de mesure ou de commande lorsqu'elle est nulle.

7. Dispositif selon l'une quelconque des revendications 1 à 3, caractérisé en ce qu'on suspend la charge sur le ressort d'articulation (5) via une articulation à cardan (16), de préférence, sur le bras de levier le plus long (1b).

a)

b)

FIG.1

FIG. 2